# EUROPEAN PATENT APPLICATION

(11) **EP 4 306 587 A1**
(43) Date of publication of application: **17.01.2024**
(21) Application number: 22184388.1
(22) Date of filing: 12.07.2022
(51) Int. Cl.: C08J 11/08

(54) **RECYCLING METHOD FOR POST-CONSUMER AND/OR POST-INDUSTRIAL IMPACT MODIFIED POLYMERS**

(71) Applicant: Trinseo Europe GmbH, 8810 Horgen (CH)
(72) Inventor: Bouquet, Gilbert, 9000 Gent (BE); Veraart, Rudi, 4527 GJ Aardenburg (NL)
(74) Representative: Hoffmann Eitle

(57) **Abstract**

Methods for treating post-consumer and/or post-industrial waste containing impact modified polymers of monovinylidene aromatic monomers are disclosed. The methods may include forming a solution comprising a solvent and at least one post-consumer and/or post-industrial waste comprising an impact modified polymer wherein the polymer is based on monovinylidene aromatic monomers and an impact modifier having a specific particle size and morphology; separating and removing undissolved and/or undispersed material in the solution from the solution; and separating and removing the solvent from dissolved and/or dispersed material to recover the impact modified polymer; wherein the solvent dissolves and/or disperses the impact modified polymer, and wherein the recovered impact modified polymer maintains the impact modifier particle size and morphology.

## Description

### TECHNICAL FIELD

This disclosure relates to methods for treating post-consumer and/or post-industrial waste containing impact modified polymers of monovinylidene aromatic monomers, wherein the impact modifier structure and quality are maintained in the recycled product.

### BACKGROUND

Polymers prepared from vinylidene aromatic monomers, such as styrene, are used in a number of polymeric systems, including foams, packaging (food packaging), medical, electronic, optical, appliance and automotive applications. Most polymeric systems prepared from polymers of vinylidene aromatic monomers are not composed only of polymer, rather, they often contain chemicals added to a polymer to modify some physical, biological and/or chemical property. Examples of common additives include impact modifiers, pigments, fillers, mineral oils, and antioxidants.

Impact modifiers are often used to improve durability and toughness of a polymeric system. Common impact modified polymers include high impact polystyrene (HIPS) and medium impact polystyrene (MIPS). The most common method of creating impact modified styrenic polymers is based on an in-situ method. When created in-situ, the impact modifiers are crosslinked and grafted to the styrenic polymers and contain a high number of styrenic polymer occlusions, which function to increase the efficiency of the impact modifier.

Since polymer systems are used across all commercial industry, significant amounts of post-industrial recycled and post-consumer wastes are produced. While entire industries are focused on the recycling of polymer waste, unique difficulties are presented when recycling waste that comprises different polymer systems and where the polymer systems comprise additives. When recycling waste that comprises more than one different polymer system, the systems must be separated during the recycling process in order to have a recycled product with known characteristics. One example of such waste is flakes of refrigerator liners. Refrigerator liners are typically processed into flakes and received by recycling centers. While these flakes contain mostly HIPS with additives, the flakes also include other parts of the refrigerator that were adhered to the liner, like foam insulation.

Attempts have been made at recycling impact modified polymers of vinylidene aromatic monomers, such as disclosed in EP 2399719. These previous attempts, however, have focused on either the removal of additives and purification of the recovered polymer or "cracking" and depolymerization of the polymer. These previous attempts further comprised the timeconsuming step of repeatedly washing the recovered polymer as well as mixtures of solvents for dissolution. In these methods additives were not recovered in the recycled polymer and impact modifiers were destroyed through use of harsh solvents. For instances where the post-consumer waste intends to be used in a similar application as its original use, new virgin additives had to be added in order to obtain the similar characteristics to the original post-consumer polymer. Further, the grafted/crosslinked/occluded impact modifiers cannot be reintroduced into purified recovered polymer to obtain similar characteristics to the original post-consumer polymer because they are not commercially available.

Accordingly, it would be desirable to provide a simplified method for recycling post-industrial and/or post-consumer waste that yields a recycled polymer material that retains its impact modifier and/or other additives to avoid the costly and time-intensive additional steps to reintroduce impact modifiers and additives. With regards to waste that contains undesirable materials bonded to the impact modified polymer, it is desirable to have a system that separates and removes undesired materials.

### SUMMARY

Disclosed herein are methods for treating post-consumer and/or post-industrial waste containing impact modified polymers of monovinylidene aromatic monomers. The methods may include forming a solution comprising a solvent and at least one post-consumer and/or post-industrial waste stream comprising an impact modified polymer wherein the polymer is based on monovinylidene aromatic monomers and an impact modifier having a specific particle size and morphology; separating and removing undissolved and/or undispersed material in the solution from the solution; and separating and removing the solvent from dissolved and/or dispersed material to recover the impact modified polymer; wherein the solvent disperses the impact modified polymer, and wherein the recovered impact modified polymer maintains the impact modifier particle size and morphology.

Disclosed herein are methods for treating post-consumer and/or post-industrial waste containing impact modified polymers of monovinylidene aromatic monomers. The methods may include forming a solution comprising a solvent and at least one post-consumer and/or post-industrial waste stream comprising polyurethane foam, an impact modified polymer wherein the polymer is based on monovinylidene aromatic monomers, and an impact modifier having a specific particle size and morphology; separating and removing undissolved and/or undispersed material in the solution from the solution, including the polyurethane foam; and separating and removing the solvent from dissolved and/or dispersed material to recover the impact modified polymer, wherein the solvent disperses the impact modified polymer. The recovered impact modified polymer may maintain the impact modifier particle size and morphology.

The impact modifier may comprise one or more polydienes. The one or more polydienes may be polybutadiene. The impact modifier may be present in the recovered impact modified polymer. The recovered impact modified polymer may comprise impact modifiers with the same specific particle size and morphology as the post-consumer and/or post-industrial waste produce. The recovered impact modifier may have a mean rubber particle size of about 4 micron to about 8 micron.

The monovinylidene aromatic monomers may be styrene, alpha-methylstyrene, vinyl toluene, ethyl styrene, propyl styrene, vinyl biphenyl, vinyl naphthalene, vinyl anthracene, and/or mixtures thereof. The impact modified polymer based on monovinylidene aromatic monomers may be high impact polystyrene (HIPS) and/or medium impact polystyrene (MIPS).

The at least one post-consumer and/or post-industrial waste may comprise at least one additive. The at least one additive may be one or more of pigments, white mineral oils, and/or antioxidants. The recovered impact modified polymer may maintain the additives.

The solvent may be any solvent that selectively dissolves and/or disperses the impact modified polymer. The solvent may dissolve and/or disperse the additives. The solvent may be ethylbenzene.

Forming the solution may be carried out at any temperature or pressure at which the solution may be successfully formed. Forming the solution may be carried out at ambient temperature and pressure. Forming the solution my further comprise intimately mixing the solvent and the at least one post-consumer and/or post-industrial waste stream. Intimate mixing may be carried out for about 5 minutes to about 4 hours and may place the solution under shear.

Separating and removing the undissolved and/or undispersed material in the solution may be carried out at any temperature at which the undissolved and/or undispersed material may be separated and removed from the solution. Separating and removing the undissolved and/or undispersed material in the solution may be carried out at ambient temperature. Separating and removing the undissolved and/or undispersed material in the solution may be carried out for about 30 minutes to about 5 hours. Separating and removing the undissolved and/or undispersed material in the solution be carried out using a filter. The undissolved and/or undispersed material separated and removed from the solution may be size above about 50 micron to about 1mm in size. The undissolved and/or undispersed material may be polyurethane foam. Separating and removing the undissolved and/or undispersed material in the solution may be carried out using a pressure differential across the filter. The pressure differential across the filter may be carried out by creating a positive pressure on the upstream side the filter and/or a vacuum on the downstream side of the filter. The filter may comprise stainless steel mesh, paper, or nylon. The filter may have a pore size of about 50 micron to about 1 mm.

The method may further include extruding the recovered impact modified polymer and pelletizing the recovered impact modified polymer.

The at least one post-consumer and/or post-industrial waste may be sourced from refrigerator liners.

The disclosed method provides a method for recycling post-industrial and/or post-consumer waste through use of a solvent that selectively dissolves the polymer and that yields recovered polymer material that maintains the impact modifiers and additives.

### BRIEF DESCRIPTION OF THE DRAWINGS

Figures 1A and 1B show SEM scans of the recovered impact modified polymer produced according to the present disclosure, using ethylbenzene as the solvent to create a 5 weight percent solid solution.
Figures 2A and 2B show SEM scans of the recovered impact modified polymer produced according to the present disclosure, using dichloromethane as the solvent to create a 5 weight percent solid solution.
Figure 3 shows the particle size distribution measured via Coulter Counter for the recovered impact modified polymer produced according to the present disclosure, using ethylbenzene as the solvent to create a 5 weight percent solid solution.
Figure 4 shows the particle size distribution measured via Coulter Counter for the recovered impact modified polymer produced according to the present disclosure, using styrene as the solvent to create a 30 weight percent solid solution.
Figure 5 shows the particle size distribution measured via Coulter Counter for the recovered impact modified polymer produced according to the present disclosure, using dichloromethane as the solvent to create a 5 weight percent solid solution.

### DETAILED DESCRIPTION

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

One or more as used herein means that at least one, or more than one, of the recited components may be used as disclosed. Ambient pressure as used herein means 1 atmosphere of pressure. Ambient temperature as used herein means a temperature between 18 and 30 degrees Celsius. Post-industrial as used herein refers to a source of a material that originates during the manufacture of a good or product. Post-consumer as used herein refers to a source of material that originates after the end consumer has used the material in a consumer good or product.

Disclosed herein are methods for treating post-consumer and/or post-industrial waste streams comprising impact modified polymers of monovinylidene aromatic monomers. The method may include forming a solution comprising a solvent and at least one post-consumer and/or post-industrial waste stream. The post-consumer and/or post-industrial waste stream may comprise an impact modified polymer, wherein the polymer is based on monovinylidene aromatic monomers and an impact modifier. The polymer may have a specific particle size and morphology. The method may further include separating and removing undissolved and/or undispersed material in the solution from the solution. The solvent may selectively disperse the impact modified polymer.

The method may further include separating and removing the solvent from dissolved and/or dispersed material to recover the impact modified polymer. The recovered impact modified polymer may maintain the impact modifier particle size and morphology present in the post-consumer and/or post-industrial waste.

The method as described herein may begin with a stream of post-industrial and/or post-consumer waste comprising an impact modified polymer. The impact modified polymer may comprise polymers of monovinylidene aromatic monomers. The polymers disclosed herein may contain monovinylidene substituted aromatic monomers. Vinylidene substituted aromatic monomers comprise vinylidene, alkenyl groups, bonded directly to aromatic structures. The monovinylidene substituted aromatic monomers may contain one or more aromatic rings, may contain one or two aromatic rings, or may contain one aromatic ring. The aromatic rings can be unsubstituted or substituted with a substituent that does not interfere with polymerization of the monovinylidene aromatic monomers or the fabrication of the polymers formed into desired structures. The substituents may be halogens or alkyl groups, such as bromine, chlorine or C₁ to C₄ alkyl groups; or a methyl group. Alkenyl groups comprise straight or branched carbon chains having one or more double bonds, or one double bond. The alkenyl groups useful for the monovinylidene aromatic monomers may include those that when bonded to an aromatic ring are capable of polymerization to form polymers. The alkenyl groups may have 2 to 10 carbon atoms, 2 to 4 carbon atoms or 2 carbon atoms. Exemplary monovinylidene aromatic monomers include styrene, alpha methyl styrene, N-phenyl maleimide and chlorinated styrenes; or alpha-methyl styrene and styrene. The vinylidene substituted aromatic monomers may be mono-vinylidene aromatic monomers, which contain one unsaturated group. Vinylidene aromatic monomers include but are not limited to those described in U.S. Pat. Nos. 4,666,987; 4,572,819 and 4,585,825, which are herein incorporated by reference. The monomer may correspond to the formula: 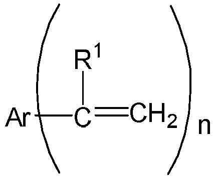 where R¹ is separately in each occurrence hydrogen or methyl and Ar is separately in each occurrence an aromatic group. Ar may contain one or more aromatic rings, may contain one or two aromatic rings, or may contain one aromatic ring. n is separately in each occurrence 1 to 3, 1 to 2 or 1. The aromatic rings can be unsubstituted or substituted with a substituent that does not interfere with polymerization of the vinylidene substituted aromatic monomers, or the fabrication of the polymers formed into desired structures. The substituents may be halogens or alkyl groups, such as bromine, chlorine or C₁ to C₄ alkyl groups; or a methyl group. The vinylidene substituted aromatic monomers may be present in the polymers in a sufficient amount such that the polymer exhibits the advantageous properties associated with polymers of vinylidene substituted aromatic monomers, for instance polystyrene. Among the advantageous properties of polymers of vinylidene substituted monomers include glass transition temperatures of about 100 °C or greater, transparency where desired for the use, high heat deflection temperatures, and the like. Other advantageous properties of polymers of vinylidene substituted monomers include processability, stiffness, and thermal stability. The polymers disclosed herein contain vinylidene substituted aromatic monomers in an amount of about 10 percent by weight of the polymers or greater, about 15 percent by weight or greater or about 20 percent by weight or greater. The polymers of one or more vinylidene aromatic monomers may contain vinylidene substituted aromatic monomers in an amount of about 100 percent by weight of the polymers or less, about 90 percent by weight or less or about 60 percent by weight or less. The impact modified polymer may be high-impact polystyrene (HIPS) or medium impact polystyrene (MIPS).

The impact modified polymer may comprise an impact modifier. The impact modifier may be any composition known to increase the durability and toughness of a polymer. The impact modifier may comprise one or more polydienes. The impact modifier may, for example, comprise a diene rubber, ethylene propylene rubber, ethylene propylene diene (EPDM) rubber, ethylene copolymer rubber, acrylate rubbers, polyisoprene rubber, silicon rubber, silicon-acrylate rubber, polyurethane, thermoplastic elastomer, halogen containing rubber, and mixtures thereof. The impact modifier may comprise polybutadiene.

The rubbers may be present in the formulated composition in sufficient amount to provide the desired impact properties to the composition. Desired impact properties include increased izod, charpy, gardner, tensile, falling dart, and the like. The waste disclosed herein may contain impact modifiers (rubbers) in an amount of about 0.5 percent by weight of the compositions or greater, about 1 percent by weight or greater, about 2 percent by weight or greater or about 7 percent by weight or greater. The waste disclosed herein may contain impact modifiers (rubbers) in an amount of about 50 percent by weight of the compositions or less, about 45 percent by weight or less, about 40 percent by weight or less, about 30 percent by weight or less, about 20 percent by weight or less or about 10 percent by weight or less.

The impact modifiers employed may be those which exhibit a second order transition temperature, sometimes referred to as the glass transition temperature (Tg), for the diene fragment which is not higher than 0° C or not higher than -20° C. as determined using conventional techniques, for example ASTM Test Method D 746-52 T. The diene rubber may have a weight average molecular weight of at least about 100 kilograms per mole (kg/mole) or a weight average molecular weight of at least about a 300 kg/mole. The diene rubber may have a weightaverage molecular weight equal to or less than about 900 kg/mole or a weight average molecular weight equal to or less than 600 kg/mole. The diene rubber may have a solution viscosity of at least 10 centiStokes (cSt) (10 percent (%) solution in styrene) or a solution viscosity of about 30 cSt. The diene rubber may have a solution viscosity about 500 cSt or about 400 cSt or less. The rubber, with graft and/or occluded polymers if present, is dispersed in the continuous matrix phase as discrete particles.

The impact modified polymer may be characterized by having a mean rubber particle size and morphology. The impact modified polymer may be characterized as having a salami morphology. The mean rubber particle size may be defined according to any acceptable method. For example, the mean rubber particle size may be defined according to a coulter counter. The mean rubber particle size may be larger than about 1 micron, larger than about 1.5 micron, larger than about 2 micron, larger than about 3 micron, larger than about 4 micron. The mean rubber particle size may be less than about 1.5 micron, less than about 3 micron, less than about 5 micron, less than about 6 micron, less than about 8 micron, less than about 10 micron.

The rubber particles may comprise a range of sizes having a mono-modal, bimodal, or multimodal distribution. The average particle size of a rubber particle refers to the volume average diameter. The volume average diameter of a group of particles may be the same as the weight average. The average particle diameter measurement includes the polymer grafted to the rubber particles and occlusions of polymer within the particles. Unless otherwise specified, the rubber particle sizes disclosed and claimed herein are determined on a Coulter Multisizer II or II e with the ACCUCOMP^{™} Software Version 2.01 by the following method: about 3 granules of polymer samples (30-70 mg) are dissolved in 5 milliliters (ml) of Dimethyl Formamide (DMF), using an ultrasonic bath for agitation for approximately 15 to 20 minutes. 10 ml or an electrolyte solution (1 percent of NH₄SCN in DMF) is mixed with 0.2 ml of the sample solution. The coulter measuring stand is used with 30 micrometer Coulter tube and a 1.16 micrometer calibration material. The coincidence level indicator of the apparatus should read between 5 and 10 percent. If the reading is above 10 percent, dilute the sample in a beaker with electrolyte solution, or if it is too low, add more drops of the polymer solution in DMF. The volumetric mean particle size is reported. The average particle size of the rubber particles may be about 0.05 micrometers or less (microns) (µm), about 0.1 micrometers or less, or about 0.6 micrometers or less. The average particle size of the rubber particles may be about 10 micrometers or less, about 5 micrometers or less, or about 2 micrometers or less.

The post-industrial and/or post-consumer waste may further comprise at least one additive. The at least one additive may be any additive common in impact modified polymers. The at least on additive may, for example, be one or more of pigments, lubricants, and/or antioxidants.

The additives may be present in the waste in an amount sufficient to perform the function of the particular additive. The additives may be present in the waste in an amount about 0.01 percent by weight or greater, about 0.1 percent by weight or greater, about 1 percent by weight or greater, about 2 percent by weight or greater, or about 3 percent by weight or greater based on the weight of the waste. The additives may be present in an amount of about 40 percent by weight or less, about 30 percent by weight or less, about 20 percent by weight or less, about 15 percent by weight or less, about 10 percent by weight or less, about 5 percent by weight or less based on the weight of the waste.

The additive may be pigment. The pigment may be any pigment which provides the desired color to the formed composition. The pigment may be any pigment common and used in industrial and consumer products. The pigment may be titanium dioxide and/or carbon black. The additive may be a lubricant. The lubricant may be mineral oil. The lubricant may be white mineral oil.

The additive may be an antioxidant. The antioxidants may be any known antioxidant which prevents oxidation of the polymers disclosed herein. The antioxidants may be one or more of phenol, phosphite, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants. The antioxidant may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants which do not contain sulfur containing groups.

Phenol based antioxidants include 2,6-di-tert-butyl-4-methylphenol; 2,6-diphenyl-4-methoxyphenol; 2,2'-methylenebis (6-tert-butyl-4-methylphenol); 2,2'-methylenebis(6-tert-butyl-4-methylphenol); 2,2'-methylene bis [4-methyl-6-(a-methylcyclohexyl)phenol]; 1,1-bis (5-tert-butyl-4-hdyroxy-2-methyl phenyl) butane; 2,2'-methylenebis(4-methyl-6-cyclohexyl phenol); 2,2'-methylenebis(4-methyl-6-nonylphenol); 1,1,3-tris(5-tert-butyl-4-hydroxy-2-methylphenyl) butane; 2,2-bis(5-tert-butyl-4-hydroxy-2-methylphenyl)-4-n-dodecylmercapto butane; ethylene glycol bis[3,3-bis(3-tert-butyl-4-hdyroxyphenyl) butyrate]; 1,1-bis(3,5-dimethyl-2-hydroxyphenyl)-3-(n-dodecylthio)butane; 4,4'-thiobis(6-tert-butyl-3-methyl phenol); 1,3,5-tris (3, 5-di-tert-butyl-4-hydroxybenzyl)-2,4,6-trimethylbenzene; dioctadecyl 2,2-bis(3,5-di-tert-butyl- 4-hydroxybenzyl)malonate ester; n-octadecyl-3-(4-hydroxy-3,5-di-tert-butylphenyl) propionate; tetrakis[methylene (3,5-di-tert-butyl-4-hydroxy hydrocinnamate) ]methane; and pentaerythritol tetrakis(3-(3,5-di-tert-butyl-4-hydroxyphenyl) propionate. Hydroquinone and alkylated hydroquinone based antioxidants include 2,6-di-tert-butyl-4-methoxyphenol, 2,5-di-tert-butylhydroquinone, 2,5-di-tert-amylhydroquinone, 2,6-di phenyl 4-octadecyloxyphenol, 2,6-di-tert-butylhydroquinone, 2,5-di-tert-butyl-4-hydroxy anisole, 3,5-di-tert-butyl-4-hydroxyanisole, 3,5-di-tert-butyl-4-hydroxyphenyl stearate, bis (3,5-di-tert-butyl-4-hydroxyphenyl) adipate. Tocopherols, based antioxidants include α-tocopherol, β-tocopherol, γ-tocopherol, δ-tocopherol and mixtures thereof (vitamin E). O- and N-benzyl compounds, based antioxidants include for example 3,5,3',5'-tetra-tert-butyl-4,4'-dihydroxydibenzyl ether, tris(3,5-di-tert-butyl-4-hydroxybenzyl) amine. Alkylidenebisphenol, based antioxidants include, 2,2'-methylenebis(6-tert-butyl-4-methyl phenol), 2,2'-methylenebis(6-tert-butyl-4-ethylphenol), 2,2'-methylenebis[4-methyl-6-(a-methyl cyclohexyl) phenol], 2,2'-methylenebis(4-methyl-6-cyclohexylphenol), 2,2'-methylene bis(6-nonyl-4-methylphenol), 2,2'-methylenebis(4,6-di-tert-butylphenol), 2,2'-ethylidenebis (4,6-di-tert-butylphenol), 2,2'-ethylidenebis(6-tert-butyl-4-isobutylphenol), 2,2'-methylene bis[6-(a-methylbenzyl)-4-nonylphenol], 2,2'-methylene bis[6-(a,a-dimethyl benzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl) butane, 2,6-bis(3-tert-butyl-5-methyl-2-hydroxybenzyl)-4-methylphenol, 1,1,3-tris(5-tert-butyl-4-hydroxy-2-methyl phenyl) butane, ethylene glycol bis[3,3-bis(3'-tert-butyl-4'-hydroxy phenyl)butyrate], bis[2-(3'-tert-butyl-2'-hydroxy-5'-methylbenzyl)-6-tert-butyl-4-methyl phenyl] terephthalate, 1,1-bis-(3,5-dimethyl-2-hydroxyphenyl)butane, 2,2-bis(3,5-di-tert-butyl-4-hydroxyphenyl)propane, 1,1,5,5-tetra(5-tert-butyl-4-hydroxy-2-methylphenyl) pentane. Hydroxybenzylated malonate based antioxidants include dioctadecyl-2,2-bis(3,5-di-tert-butyl-2-hydroxybenzyl)malonate, di-octadecyl-2-(3-tert-butyl-4-hydroxy-5-methyl benzyl)malonate, bis[4-(1,1,3,3-tetramethyl butyl)phenyl]-2,2-bis(3,5-di-tert-butyl-4-hydroxy benzyl)malonate. Aromatic hydroxybenzyl based antioxidants include 1,3,5-tris(3,5-di-tert-butyl-4-hydroxybenzyl)-2,4,6-trimethyl benzene, 1,4-bis(3,5-di-tert-butyl-4-hydroxybenzyl)-2,3,5,6-tetramethylbenzene, 2,4,6-tris (3,5-di-tert-butyl-4-hydroxybenzyl)phenol. Triazine compounds based antioxidants include 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenyl propionyl)-hexahydro-1,3,5-triazine and 1,3,5-tris(3,5-dicyclohexyl-4-hydroxybenzyl) isocyanurate. Benzylphosphonates, based antioxidants include dimethyl-2,5-di-tert-butyl-4-hydroxybenzylphosphonate, diethyl-3,5-di-tert-butyl-4-hydroxybenzylphosphonate, diocta decyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid. Acylaminophenol based antioxidants include, for example 4-hydroxylauranilide, 4-hydroxystearanilide, octyl N-(3,5-di-tert-butyl-4-hydroxyphenyl) carbamate. Exemplary antioxidants include esters of D-(3,5-di-tert-butyl-4-hydroxyphenyl) propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane. Exemplary antioxidants include esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl) oxamide, 3-thia undecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane. Exemplary antioxidants include esters of β-(3,5-dicyclohexyl-4-hydroxy phenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris (hydroxyethyl) isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane.Exemplary antioxidants include esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane.Exemplary antioxidants include amides of 13-(3,5-di-tert-butyl-4-hydroxyphenyl) propionic acid e.g. N,N'-bis(3,5-di-tert-butyl-4-hydroxyphenylpropionyl) hexamethylene diamide, N,N'-bis(3,5-di-tert-butyl-4-hydroxyphenylpropionyl) tri methylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard@ XL-1, supplied by Uniroyal).An exemplary antioxidant is ascorbic acid (vitamin C).Aminic antioxidants include N,N'-di-isopropyl-p-phenylenediamine, N,N'-di-sec-butyl-p-phenylene diamine, N,N'-bis(1,4-dimethylpentyl)-p-phenylenediamine, N,N'-bis(1-ethyl-3-methylpentyl) -p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylene diamine, N-isopropyl-N'-phenyl-p-phenylenediamine, N-(1,3-dimethyl butyl)-N'-phenyl-p-phenylenediamine, N-(1-methylheptyl)-N'-phenyl-p-phenylenediamine, N-cyclohexyl-N'-phenyl-p-phenylenediamine, N,N'-dimethyl-N,N'-di-sec-butyl-p-phenylene diamine, diphenylamine, N-allyldiphenylamine, 4-isopropoxydiphenylamine, N-phenyl-1-naphthyl amine, N-(4-tert-octylphenyl)-1-naphthylamine, N-phenyl-2-naphthylamine, octylated diphenylamine, p,p'-di-tert-octyldiphenylamine, 4-n-butylaminophenol, 4-butyryl amino phenol, 4-nonanoylaminophenol, 4-dodecanoylaminophenol, 4-octa decanoyl aminophenol, bis(4-methoxyphenyl)amine, 2,6-di-tert-butyl-4-dimethylaminomethylphenol, 2,4'-diamino diphenylmethane, 4,4'-diaminodiphenylmethane, N,N,N',N'-tetramethyl-4,4'-diamino diphenyl ethane, 1,2-bis[(2-methylphenyl)amino]ethane, 1,2-bis(phenylamino) propane, (o-tolyl)biguanide, bis[4-(1',3'-dimethylbutyl)phenyl]amine, tert-octylated N-phenyl-1-naphthyl amine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl /isohexyl diphenylamines, a mixture of mono- and dialkylated tert-butyldiphenylamines, N,N,N',N'-tetraphenyl-1,4-diaminobut-2-ene, N,N-bis(2,2,6,6-tetramethylpiperid-4-yl-hexa methylene diamine, bis(2,2,6,6-tetramethylpiperid-4-yl)sebacate, 2,2,6,6-tetramethyl piperidin-4-one, 2,2,6,6-tetramethylpiperidin-4-ol.Phosphoric antioxidants include tetrakis(2,4-di-t-butyl phenyl)-4,4-biphenylene phosphonite, tris(2,4-di-t-butylphenyl) phosphite, 2,2'-methylene bis(4,6-di-t-butylphenyl) octyl phosphite, bis(2,4-di-t-butylphenyl)pentaerythritol diphosphite, bis(2,6-di-t-butyl-4-methylphenyl)pentaerythritol diphosphite, di(nonylphenyl)pentaerythritol diphosphite, phenyl-bisphenol A-pentaerythritol diphosphite, distearylpentaerythritol diphosphite, dioctylpentaerythritol diphosphite, dilaurylpentaerythritol diphosphite, diphenylpentaerythritol diphosphite, dicyclohexylpentaerythritol diphosphite, bis(2,4,6-tri-t-butylphenyl) pentaerythritol diphosphite, 2,2'-ethylidenebis(4,6-di-t-butylphenyl) fluorophosphite, trisindecyl phosphite, trisdodecyl phosphite, phenylisooctyl phosphite, phenylindecyl phosphite, phenyldodecyl phosphite, diphenylisooctyl phosphite, diphenylisodecyl phosphite, diphenyldodecyl phosphite, triphenyl phosphite, tris(monononylphenyl) phosphite and tris(dinonylphenyl)phosphite. The antioxidant may be octadecyl 3,5-di-(tert)-butyl-4-hydroxyhydrocinnamate which is commercially available as IRGANOX 1076 from BASF.

The antioxidants may be present in the compositions and structures formed therefrom in any amount which retards oxidation of the polymers. The antioxidants may be present in an amount based on the weight of the compositions disclosed of about 100 parts per million or greater, about 200 parts per million or greater, about 300 parts per million or greater, about 500 parts per million or greater or about 1000 parts per million or greater. The antioxidants may be present in an amount based on the weight of the compositions disclosed of about 10,000 parts per million or less, about 8,000 parts per million or less or about 6,000 parts per million.

The post-industrial and/or post-consumer waste may be any waste comprising at least one impact modified polymer. The waste may be any impact modified polymer containing one or more vinylidene aromatic polymers. The waste may be any impact modified polystyrene. The waste, for example, may comprise high-impact polystyrene (HIPS) or medium-impact polystyrene (MIPS). The waste may, for example, comprise packaging, food packaging, or refrigerator liners. In the case of refrigerator liners, the waste may be post-industrial as unused scrap from the manufacturer, or post-consumer from refrigerators used by customers. The impact modified polymer may comprise post-consumer recycled material. In the case of post-consumer recycled refrigerator liners, the waste stream may comprise additional materials adhered to the liner. For example, the waste stream of a post-consumer recycled refrigerator liner may comprise acrylonitrile butadiene styrene (ABS), polyolefins, polyvinyl chloride (PVC), and/or polyurethanes.

The stream of post-industrial and/or post-consumer waste may be in any form capable of dissolution. The stream may, for example, be in the form of flakes. The stream may comprise, for example, refrigerator liners or food containers. Waste from refrigerator liners may be derived from unused scrap from the manufacturer of the refrigerators, or in the form of post-consumer waste from refrigerators that were created and sold to customers. The waste stream may comprise polyurethan foams, polyolefins, polyvinyl chloride (PVC) and/or other polymers.

The method described herein may comprise forming a solution comprising the stream of post-industrial and/or post-consumer waste and a solvent. The solution may be formed at any temperature and pressure. The solution may be formed at ambient temperature and pressure. The solution may comprise at 5 weight percent solid of waste or greater, 10 weight percent solid of waste or greater, 20 weight percent solid of waste or greater, 30 weight percent solid of waste or greater. The solution may comprise at 50 weight percent solid of waste or less, 40 weight percent solid of waste or less, 30 weight percent solid of waste or less. The solvent may be any solvent capable of selectively dissolving the polymer. The solvent may be any solvent capable of selectively dispersing the impact modifiers, without destroying the morphology of the impact modifiers. The solvent may be any solvent capable of selectively dissolving and/or dispersing the additives. The solvent may be any solvent that does not disperse or dissolve unwanted impurities in the waste streams as disclosed herein. The solvent may be ethylbenzene.

Forming a solution may comprise intimately mixing the solvent and the at least one post-consumer and or post-consumer waste stream. The solution may be intimately mixed for a sufficient time to dissolve the impact modified polymer. The solution may be intimately mixed sufficient time to dissolve and/or dissipate the additives. Intimately mixing the solution may place the solution under shear. The solution may be intimately mixed, for example, for about 5 minutes or more, about 10 minutes or more, about 30 minutes or more, at least about 1 hour, or about 2 hours or more. The solution may be intimately mixed for about 4 hours or less, about 6 hours or Ikess, about 10 hours or less, or about 12 hours or less.

The method described herein may comprise separating and removing undissolved and/or undispersed material in the solution from the solution. The undissolved and/or undispersed material may be any compound present in the waste stream that is not dissolved and/or dispersed by the solvent. The undissolved and/or undispersed material may comprise acrylonitrile butadiene styrene (ABS), polyolefins, polyvinyl chloride (PVC), and/or polyurethanes. For example, when the waste stream is post-consumer recycled refrigerator liners, the undissolved and/or undispersed may comprise polyurethane foam and/ or polyolefins. The separating and removing the undissolved and/or undispersed material in the solution from the solution may comprise separating and removing the undissolved and/or undispersed material about 50 micron or greater, about 100 micron or greater, about 150 micron or greater about 500 micron or greater and about 1 mm or less, about 3 mm or less from the solution. The undissolved and/or undispersed material may be removed using any appropriate method. The undissolved and/or undispersed material may be removed, for example, using a filter. The filters may be made from any materials which separates the undissolved and undispersed materials from the solution. Exemplary filters include stainless steel mesh filters, paper filters, and nylon filters. Any filter with appropriate pore size to remove the undissolved and/or undispersed material may be used. Exemplary pore sizes include about 50 micron or greater, about 100 microns or greater, about 150 micron or greater, or about 500 micron or less, about 1 mm or less, and about 3 mm or less.

The separating and removing the undissolved and/or undispersed material may be carried out at any temperature in which the separation and removal may be successful. The separating and removing the undissolved and/or undispersed material may be carried out at ambient temperature. The separating and removing the undissolved and/or undispersed material may be carried out at ambient pressure. The separating and removing the undissolved and/or undispersed material may be carried out using a pressure differential across the filter. The pressure differential may be carried out by creating a vacuum or negative pressure on the downstream side of the filter. The negative pressure may be created by a vacuum. The negative pressure may be about 0.5 bar or less, about 0.4 bar or less, 0.3 bar or less. The pressure differential may be carried out by creating a positive pressure on the upstream side of the filter. The upstream pressure may be about 1 bar or greater, about 3 bar or greater, 5 bar or greater. The upstream pressure may be about 3 bar or less, about 2 bar or less, 1 bar or less. The separating and removing of the undissolved and/or undispersed material may, for example, be conducted for about 30 minutes or greater, about 1 hour or greater, or about 2 hours or greater. The separating and removing the undissolved and/or undispersed material may, for example, be conducted for about 3 hours or less, about 4 hours or less, about 5 hours or less, or about 6 hours or less.

The method described herein may comprise separating and removing the solvent from the dissolved and/or dispersed material to recover the impact modified polymer. The solvent may be removed by any means sufficient for removal. Removing the solvent from dissolved and/or dispersed material to recover the impact modified polymer may comprise drying the recovered impact modified polymer. The solvent may be removed, for example, by air drying the solution, drying under vacuum by techniques known in industry, and/or drying the solution in an oven. Separating and removing the solvent may be carried out for sufficient time to recover the recovered impact modified polymer. The solvent may be removed from the recovered impact modified polymer in sufficient quantities to meet an acceptable threshold of solvent in the recovered impact modified polymer. For example, the solvent may be removed from the recovered impact modified polymer until about 500 ppm of the solvent remain. Removing the solvent may, for example, be conducted for about 5 minutes or greater, about 15 minutes or greater, about 30 minutes or greater, about 1 hour or greater, about 6 hours or greater, about 12 hours or greater, or about 24 hours or greater. Removing the solvent may be carried out at any temperature and pressure at which the solvent may be successfully removed from the dissolved and/or dispersed material. Removing the solvent may be carried out at ambient temperature and/or elevated temperature. The separating and removing the solvent may be carried out at ambient pressure and/or under a vacuum. For example, separating and removing the solvent may be carried out from ambient temperature to about 185 degrees Celsius, from about 40 to about 150 degrees Celsius, from about 60 to about 120 degrees Celsius, from about 80 to about 100 degrees Celsius.

The recovered impact modified polymer disclosed herein may contain vinylidene substituted aromatic monomers in an amount of about 10 percent by weight of the polymers or greater, about 15 percent by weight or greater or about 20 percent by weight or greater. The polymers of one or more vinylidene aromatic monomers may contain vinylidene substituted aromatic monomers in an amount of about 100 percent by weight of the polymers or less, about 90 percent by weight or less or about 60 percent by weight or less. The recovered impact modified polymer may comprise the impact modifiers. The impact modifiers of the impact modified polymer may be substantially similar in particle size and morphology as the impact modifier of the waste. In instances where the waste contained at least one additive, the recovered impact modified polymer may comprise the at least one additive.

The method disclosed herein may further comprise extruding the recovered impact modified polymer. Extrusion of the recovered impact modifier may be conducted by any appropriate means.

The method disclosed herein may further comprise pelletizing the recovered impact modified polymer.

### Examples

Samples 1A, 1B, and 1C are prepared according to the method disclosed herein. 20 grams of post-consumer recycled refrigerator flakes are added to 380 grams of ethylbenzene (EB) in a 1 L polyethylene wide-neck bottle. The resulting solution is 5 weight percent solids. The bottle is placed in a IKA shaker and submitted to rotational shaking overnight, approximately 16 hours. The rotational shaking is approximately 150 rpm. The solution is then separated into a solvent and dissolved and/or dispersed portion and an undissolved and/or undissolved portion. The solution is filtered over a Buchner filter of diameter 11 cm having a mesh size of 150 micron. The solution is filtered under a slight vacuum on the downstream side of the filter, approximately 0.5 bar. The undissolved and/or undispersed portion is rinsed with an additional 20 grams of ethylbenzene.

The solvent and dissolved and/or dispersed portion is transferred to an open beaker and left overnight to allow the solvent to evaporate. The remaining solvent and dissolved and/or dispersed portion is dried in a vacuum oven at approximately 150 degrees Celsius and full vacuum for about 1 hour. SEM scans of the recovered impact modified polymer of Sample 1C are shown in Figures 1A and 1B. Figures 1A and 1B show the particles retaining their standard shape and only a minor fraction of core-shell particles is created. Sample 1C is analyzed on a Coulter counter, the results shown in Figure 3.

Samples 2A and 2B are prepared according to the method disclosed herein, except using styrene (STY) as the solvent. Sample 2C is prepared according to the method disclosed herein, except using styrene as the solvent to create a 30 weight percent solid solution. Sample 2C is analyzed on a Coulter counter, the results shown in Figure 4.

Sample 3 is prepared according to the method disclosed herein, exception using dichloromethane (DCM) as the solvent. SEM scans of the recovered impact modified polymer of Sample 3 are shown in Figures 2A and 2B. Figures 2A and 2B show the rubber particles are fragmented and the rubber membranes are destroyed. Sample 3 is analyzed on a Coulter counter, the results shown in Figure 5.

Samples 4A and 4B are prepared according to the method disclosed in EP 2399719. 20 grams of post-consumer recycled refrigerator flakes were added to 380 grams of ethylbenzene in a1 L polyethylene wide-neck bottle. The resulting solution is 5 weight percent solids. The bottles were placed in an IKA shaker and submitted to rotational shaking overnight, approximately 16 hours. The rotational shaking is approximately 150 rpm.

In an open 10 liter bucket, 5 liters of n-heptane is added and stirred firmly by an IKA stirrer at approximately 1000 rpm. The sample is slowly added to the n-heptane, over a period of approximately 2 minutes. The mixture is subject to 5 additional minutes of firm stirring. The sample is left to have the precipitate sink down, and the clear mixture is decanted. The precipitate is filtered over a Buchner filter with a diameter of 11 cm and a mesh size of 150 microns. During filtration, a slight vacuum is created, approximately 0.5 bar. An additional 20 grams of n-heptane is used to rinse the residue. The filtrate is transferred to an open beaker and left overnight to have the main part of the n-heptane evaporate away. The sample is dried in a vacuum oven for 1 hour at 150 °C under full vacuum. The sample is reintroduced into the 1 L polyethylene bottle, and 380 grams of dichloromethane is added. The bottle is placed in an IKA shaker for 6 hours. The filtrate is transferred into an open beaker and left overnight to have the main part of the dichloromethane evaporated. The sample is dried in a vacuum oven for 1 hour at 150 °C under full vacuum.

Table 1 summarizes the results of each of the sample preparations.

**Table 1**

| | | **Sample** | | | | | | | | |
|---|---|---|---|---|---|---|---|---|---|---|
| | | **1A** | **1B** | **1C** | **2A** | **2B** | **2C** | **3** | **4A** | **4B** |
| Solvent | | EB | EB | EB | STY | STY | STY | DCM | EB | EB |
| GPC for Styrenics | Mw (kDa) | 195 | 192 | 192 | 195 | 194 | 198 | 186 | 189 | 191 |
| | Mn (kDa) | 76 | 73 | 474 | 75 | 76 | 77 | 69 | 71 | 71 |
| | PD | 2.57 | 2.61 | 2.58 | 2.59 | 2.54 | 2.56 | 2.70 | 2.67 | 2.67 |
| | Mz (kDa) | 341 | 333 | 337 | 343 | 340 | 346 | 332 | 336 | 339 |
| IR - Recovered Impact Modified Polymer Characterization | Acrylonitrile (wt %) | 0.9 | 0.8 | 0.4 | 1.8 | 1.9 | 1.1 | 1.2 | 1.4 | 1.4 |
| | Rubber (wt %) | 7.3 | 6.6 | 6.3 | 5.8 | 7.0 | 5.9 | 6.2 | 5.0 | 5.2 |
| | Styrene (wt %) | 91.8 | 92.6 | 93.3 | 92.4 | 91.2 | 93.0 | 92.6 | 93.6 | 93.4 |
| Rubber Particle Size mean | (micron) | | | 4.4 | | | 4.4 | 2.6 | | |
| Non-dissolved residue | (wt%) | 6.9 | 6.9 | 12.0 | 1.9 | 1.9 | 3.3 | 2.1 | | |

This data shows that dissolving the sample in dichloromethane (Sample 3) has a detrimental effect on the rubber particle size when compared to dissolving the sample in ethylbenzene (Sample 1C). Comparing the recovered rubber particle sizes of these two samples, the rubber particle size of Sample 3 are smaller, measuring 2.6 micron compared to 4.4 micron of Sample 1C. Figures 2A and 2B also show that the rubber membranes have been partially destroyed in Sample 3 as compared to Figures 1Aand 1B showing Sample 1C.

Comparative Examples Samples 4A and 4B show that the acrylonitrile content in the recovered polymer is quite high at 1.4 weight percent, indicating that the recovered polymer contains polymers based on acrylonitrile, such as acrylonitrile butadiene styrene (ABS). Samples 2A and 2B also show a high acrylonitrile level at 1.8 and 1.9 weight percent, which is not desired.

Sample 1C demonstrates the desired performance: the recovered impact modified polymer rubber particle size is high at 4.4 microns; the rubber particles are not damaged as seen in Figures 1A and 1 B; and the amount of acrylonitrile is low at 0.4 weight percent due to selective dissolution of polystyrene. This is further confirmed by the large amount of non-dissolved residue for these samples, with Sample 1C exemplifying 12.0 weight percent non-dissolved residue.

### Enumerated Embodiments

1. A method comprising:
   a. forming a solution comprising a solvent and at least one post-consumer and/or post-industrial waste comprising an impact modified polymer wherein the polymer is based on monovinylidene aromatic monomers and an impact modifier having a specific particle size and morphology;
   b. separating and removing undissolved and/or undispersed material in the solution from the solution; and
   c. separating and removing the solvent from dissolved and/or dispersed material to recover the impact modified polymer;
   wherein the solvent disperses the impact modified polymer, and wherein the recovered impact modified polymer maintains the impact modifier particle size and morphology.
2. The method of embodiment 1, wherein the impact modifier comprises one or more polydienes.
3. The method of embodiment 1 or 2, wherein the impact modifier is polybutadiene.
4. The method of any of the preceding embodiments, wherein the recovered impact modifier is characterized by a mean rubber particle size of about 4 micron to about 8 micron.
5. The method of any of the preceding embodiments, wherein the at least one post-consumer and/or post-industrial waste comprises at least one additive.
6. The method of any of the preceding embodiments, wherein the at least one additive is one or more of pigments, white mineral oils, and/or antioxidants.
7. The method of any of the preceding embodiments, wherein the at least one additive is one or more pigments.
8. The method of any of the preceding embodiments, wherein the at least one additive is one or more antioxidants.
9. The method of any of the preceding embodiments, wherein the one or more pigments comprise titanium dioxide and/or carbon black.
10. The method of any of the preceding embodiments, wherein the one or more antioxidants are one or more of phenol, phosphites, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or amine based antioxidants.
11. The method of any of the preceding embodiments, wherein the recovered impact modified polymer comprises the at least one additive.
12. The method of any of the preceding embodiments, comprising:
   d. extruding the recovered impact modified polymer.
13. The method of embodiment 12, comprising:
   e. pelletizing the recovered impact modified polymer.
14. The method of any of the preceding embodiments, wherein the monovinylidene aromatic monomers are styrene, alpha-methylstyrene, vinyl toluene, ethyl styrene, propyl styrene, vinyl biphenyl, vinyl naphthalene, vinyl anthracene, and/or mixtures thereof.
15. The method of any of the preceding embodiments, wherein the impact modified polymer based on monovinylidene aromatic monomers is high impact polystyrene (HIPS) and/or medium impact polystyrene (MIPS).
16. The method of any of the preceding embodiments, wherein the solvent selectively dissolves and/or disperses the impact modified polymer.
17. The method of any of the preceding embodiments, wherein the solvent is ethylbenzene.
18. The method of any of the preceding embodiments, wherein the at least one post-consumer and/or post-industrial waste is sourced from refrigerator liners.
19. The method of any of the preceding embodiments, wherein the at least one post-consumer and/or post-industrial waste is in the form of flakes.
20. The method of any of the preceding embodiments, wherein forming the solution is carried out at ambient temperature and pressure.
21. The method of any of the preceding embodiments, wherein forming the solution comprises:
   intimately mixing the solvent and the at least one post-consumer and/or post-industrial waste.
22. The method of any of the preceding embodiments, wherein intimately mixing the solvent and the at least one post-consumer and/or post-industrial waste places the solution under shear.
23. The method of any of the preceding embodiments, wherein intimately mixing the solvent and the at least one post-consumer and/or post-industrial waste is carried out for about 5 minutes to about 4 hours.
24. The method of any of the preceding embodiments, wherein separating and removing the undissolved and/or undispersed material in the solution from the solution is carried out for about 30 minutes to about 5 hours.
25. The method of any of the preceding embodiments, wherein separating and removing the undissolved and/or undispersed material in the solution from the solution comprises:
   separating and removing the undissolved and/or undispersed material above about 50 micron to about 1 mm in size from the solution.
26. The method of any of the preceding embodiments, wherein separating and removing the undissolved and/or undispersed material in the solution from the solution is carried out using a filter.
27. The method of embodiment 26, wherein separating and removing the undissolved and/or undispersed material in the solution from the solution is carried out using a pressure differential across the filter.
28. The method of embodiment 27, wherein the pressure differential across the filter is carried out by creating a negative pressure on the downstream side of the filter.
29. The method of embodiment 27, wherein the pressure differential across the filter is carried out by creating a positive pressure on the upstream side of the filter.
30. The method of any of the embodiments 26 through 29, wherein the filter comprises stainless steel mesh, paper or nylon.
31. The method of any of the embodiments 26 through 30, wherein the filter comprises about 50 micron to about 1 mm pore size.
32. The method of any of the preceding embodiments, wherein the separating and removing the solvent from the dissolved and/or dispersed material is carried out at ambient temperature.
33. The method of any of the preceding embodiments, wherein the impact modified polymer comprises post-consumer recycled material.
34. The method of any of the preceding embodiments, wherein the undissolved and/or undispersed material is acrylonitrile butadiene styrene (ABS), polyolefins, polyvinyl chloride (PVC), and/or polyurethanes.
35. The method of any of the preceding embodiments, wherein the solvent dissolves and/or disperses the at least one additive.
36. A method comprising:
   a. forming a solution comprising a solvent and at least one post-consumer and/or post-industrial waste comprising polyurethane foam, an impact modified polymer wherein the polymer is based on monovinylidene aromatic monomers, and an impact modifier having a specific particle size and morphology;
   b. separating and removing undissolved and/or undispersed material in the solution from the solution, including the polyurethane foam; and
   c. separating and removing the solvent from dissolved and/or dispersed material to recover the impact modified polymer,
   wherein the solvent disperses the impact modified polymer, and wherein the recovered impact modified polymer maintains the impact modifier particle size and morphology.
37. The method of embodiment 36, wherein the undissolved and/or undispersed material comprises polyurethane foam.
38. The method of embodiments 36 or 37, wherein separating and removing the undissolved and/or undispersed material in the solution from the solution comprises:
   removing the polyurethane foam.
39. The method of any of the embodiments 36 through 38, wherein the impact modifier comprises one or more polydienes.
40. The method of any of the embodiments 36 through 39, wherein the impact modifier is polybutadiene.
41. The method of any of the embodiments 36 through 40, wherein the recovered impact modifier is characterized by a mean rubber particle size of about 4 micron to about 8 micron.
42. The method of any of the embodiments 36 through 41, wherein the at least one post-consumer and/or post-industrial waste comprises at least one additive.
43. The method of any of the embodiments 36 through 42, wherein the at least one additive is one or more of pigments, white mineral oils, and/or antioxidants.
44. The method of any of the embodiments 36 through 43, wherein the at least one additive is one or more pigments.
45. The method of any of the embodiments 36 through 44, wherein the at least one additive is one or more antioxidants.
46. The method of any of the embodiments 36 through 45, wherein the one or more pigments comprise titanium dioxide and/or carbon black.
47. The method of any of the embodiments 36 through 46, wherein the one or more antioxidants are one or more of phenol, phosphites, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or amine based antioxidants.
48. The method of any of the embodiments 36 through 47, wherein the recovered impact modified polymer comprises the at least one additive.
49. The method of method of any of the embodiments 36 through 48, comprising:
   d. extruding the recovered impact modified polymer.
50. The method of embodiment 49, comprising:
   e. pelletizing the recovered impact modified polymer.
51. The method of any of the embodiments 36 through 50, wherein the monovinylidene aromatic monomers are styrene, alpha-methylstyrene, vinyl toluene, ethyl styrene, propyl styrene, vinyl biphenyl, vinyl naphthalene, vinyl anthracene, and/or mixtures thereof.
52. The method of any of the embodiments 36 through 51, wherein the impact modified polymer based on monovinylidene aromatic monomers is high impact polystyrene (HIPS) and/or medium impact polystyrene (MIPS).
53. The method of any of the embodiments 36 through 52, wherein the solvent selectively dissolves and/or disperses the impact modified polymer.
54. The method of any of the embodiments 36 through 53, wherein the solvent is ethylbenzene.
55. The method of any of the embodiments 36 through 54, wherein the at least one post-consumer and/or post-industrial waste is sourced from refrigerator liners.
56. The method of any of the embodiments 36 through 55, wherein the at least one post-consumer and/or post-industrial waste is in the form of flakes.
57. The method of any of the embodiments 36 through 56, wherein forming the solution is carried out at ambient temperature and pressure.
58. The method of any of the embodiments 36 through 57, wherein forming the solution comprises:
   intimately mixing the solvent and the at least one post-consumer and/or post-industrial waste.
59. The method of any of the embodiments 36 through 58, wherein intimately mixing the solvent and the at least one post-consumer and/or post-industrial waste places the solution under shear.
60. The method of any of the embodiments 36 through 59, wherein intimately mixing the solvent and the at least one post-consumer and/or post-industrial waste is carried out for about 5 minutes to about 4 hours.
61. The method of any of the embodiments 36 through 60, wherein separating and removing the undissolved and/or undispersed material in the solution from the solution is carried out for about 30 minutes to about 5 hours.
62. The method of any of the embodiments 36 through 61, wherein separating and removing the undissolved and/or undispersed material in the solution from the solution comprises separating and removing the undissolved and/or undispersed material above about 50 micron to about 1 mm in size from the solution.
63. The method of any of the embodiments 36 through 62, wherein separating and removing the undissolved and/or undispersed material in the solution from the solution is carried out using a filter.
64. The method of embodiment 63, wherein separating and removing the undissolved and/or undispersed material in the solution from the solution is carried out using a pressure differential across the filter.
65. The method of embodiment 64, wherein the pressure differential across the filter is carried out by creating a negative pressure on the downstream side of the filter.
66. The method of embodiment 64, wherein the pressure differential across the filter is carried out by creating a positive pressure on the upstream side of the filter.
67. The method of any of the embodiments 63 through 66, wherein the filter comprises stainless steel mesh, paper or nylon.
68. The method of any of the embodiments 63 through 67, wherein the filter comprises about 50 micron to about 1 mm pore size.
69. The method of any of the embodiments 36 through 68, wherein the separating and removing the solvent from the dissolved and/or dispersed material is carried out at ambient temperature.
70. The method of any of the embodiments 36 through 69, wherein the at least impact modified polymer based on monovinylidene aromatic monomers comprises post-consumer recycled material.
71. The method of any of the embodiments 36 through 70, wherein the undissolved and/or undispersed material is acrylonitrile butadiene styrene (ABS) and/or polyolefins.
72. The method of any of the embodiments 36 through 71, wherein the recovered impact modified polymer does not contain polyurethane foam.
73. The method of any of the embodiments 36 through 72, wherein the at least impact modified polymer comprises post-consumer recycled material.
74. The method of any of the embodiments 36 through 73, wherein the solvent dissolves and/or disperses the at least one additive.

## Claims

1. A method comprising:
a. forming a solution comprising a solvent and at least one post-consumer and/or post-industrial waste comprising an impact modified polymer wherein the polymer is based on monovinylidene aromatic monomers and an impact modifier having a specific particle size and morphology;
b. separating and removing undissolved and/or undispersed material in the solution from the solution; and
c. separating and removing the solvent from dissolved and/or dispersed material to recover the impact modified polymer;
wherein the solvent disperses the impact modified polymer, and wherein the recovered impact modified polymer maintains the impact modifier particle size and morphology.

2. The method of claim 1, wherein the impact modifier comprises one or more polydienes.

3. The method of any of the preceding claims, wherein the recovered impact modifier is **characterized by** a mean rubber particle size of about 4 micron to about 8 micron.

4. The method of any of the preceding claims, wherein the at least one post-consumer and/or post-industrial waste comprises at least one additive.

5. The method of any of the preceding claims, wherein the at least one additive is one or more of pigments, white mineral oils, and/or antioxidants.

6. The method of any of the preceding claims, wherein the recovered impact modified polymer comprises the at least one additive.

7. The method of any of the preceding claims, comprising:
d. extruding the recovered impact modified polymer; and
e. pelletizing the recovered impact modified polymer.

8. The method of any of the preceding claims, wherein the monovinylidene aromatic monomers are styrene, alpha-methylstyrene, vinyl toluene, ethyl styrene, propyl styrene, vinyl

9. The method of any of the preceding claims, wherein the solvent selectively disperses the impact modified polymer.

10. The method of any of the preceding claims, wherein forming the solution comprises: intimately mixing the solvent and the at least one post-consumer and/or post-industrial waste.

11. The method of any of the preceding claims, wherein separating and removing the undissolved and/or undispersed material in the solution from the solution comprises:
separating and removing the undissolved and/or undispersed material above about 50 micron to about 1 mm in size from the solution.

12. The method of any of the preceding claims, wherein separating and removing the undissolved and/or undispersed material in the solution from the solution is carried out using a filter.

13. The method of claim 12, wherein the filter comprises about 50 micron to about 1 mm pore size.

14. The method of any of the preceding claims, wherein separating and removing the solvent from dissolved and/or dispersed material to recover the impact modified polymer is carried out until the recovered impact modified polymer comprises less than about 500 ppm of the solvent.

15. A method comprising:
a. forming a solution comprising a solvent and at least one post-consumer and/or post-industrial waste comprising polyurethane foam, an impact modified polymer wherein the polymer is based on monovinylidene aromatic monomers, and an impact modifier having a specific particle size and morphology;
b. separating and removing undissolved and/or undispersed material in the solution from the solution, including the polyurethane foam; and
c. separating and removing the solvent from dissolved and/or dispersed material to recover the impact modified polymer,
wherein the solvent disperses the impact modified polymer, and wherein the recovered impact modified polymer maintains the impact modifier particle size and morphology.
